# FASCICULE DE BREVET EUROPEEN

(11) **EP 3 114 817 B1**
(45) Date de publication et mention de la délivrance du brevet: **27.12.2017**
(21) Numéro de dépôt: 15713209.3
(22) Date de dépôt: 27.02.2015
(51) Int. Cl.: H04L 29/08, G06F 9/44, G06F 1/00, H04L 12/40, H04L 29/06, H04L 12/12

(54) **PROCÉDÉ ET SYSTÈME POUR LE TELECHARGEMENT DE DONNÉES VERS AU MOINS UN CALCULATEUR**
VERFAHREN UND SYSTEM ZUM HERUNTERLADEN VON DATEN AUF MINDESTENS EINEN COMPUTER
METHOD AND SYSTEM FOR DOWNLOADING DATA TO AT LEAST ONE COMPUTER

(30) Priorité: 07.03.2014 FR 1451878
(43) Date de publication de la demande: 11.01.2017
(73) Titulaire: PSA Automobiles SA, 78300 Poissy (FR)
(72) Inventeur: SCHMIDT, Pierre, F-95240 Cormeilles en Parisis (FR); LOPEZ, Thierry, F-78700 Conflans Ste Honorine (FR)
(74) Mandataire: Jeannin, Laurent Jean-Pierre
(86) Numéro de dépôt international: PCT/FR2015/050491
(87) Numéro de publication internationale: WO 2015/136181

(56) Documents cités:
- EP-A1- 2 339 778
- US-B1- 8 527 139
- FLEXRAY CONSORTIUM: "FlexRay Communications System Protocol Specification V 2.1 Revision A", INTERNET CITATION, 15 décembre 2005 (2005-12-15), pages 1-245, XP002521572, Extrait de l'Internet: URL:www.xxx.com [extrait le 2005-12-15]

## Description

L'invention concerne un procédé et un système de téléchargement d'au moins un fichier dans un ou plusieurs calculateurs.

Dans la suite de cette description, lorsque le fichier à télécharger contient des instructions ou le code exécutable d'un logiciel, on parle également de téléchargement d'un logiciel.

La complexité croissante de la fonction électronique embarquée entraîne une multiplication des boîtiers électroniques (ou calculateurs) montés sur les véhicules automobiles. Afin de limiter la diversité qui en résulte, il a été décidé de pratiquer un téléchargement de ces calculateurs dans le flux de production des véhicules. L'opération est réalisée moyennant un outil débarqué qui se connecte sur la prise diagnostic du véhicule et permet de programmer dans la mémoire du ou des calculateurs le logiciel qui assure un fonctionnement conforme du véhicule produit en prenant en compte les caractéristiques (motorisation, options) propres à ce véhicule. La communication entre l'outil de production et le ou les calculateurs fait usage de la technologie CAN 500kbps permettant de transférer les données à programmer.

On connaît déjà dans l'état de la technique des procédés et des systèmes de téléchargement de fichiers dans des calculateurs embarqués à bord de véhicules automobiles, tels que ceux décrits par exemple dans le document FR-A-2719924. Ce document détaille les différentes étapes successives de la procédure utilisée lors de l'assemblage des véhicules ou dans le réseau après-vente d'un constructeur, lors de la correction d'une prestation par échange de fichier.

Cette fonction de téléchargement a été optimisée par la suite afin de la rendre compatible avec des exigences du flux de fabrication des véhicules, dans lequel le téléchargement d'un ensemble de calculateurs d'un même véhicule est réalisé simultanément. On peut par exemple se reporter au document FR-A-2825813 qui décrit cette optimisation.

On connaît par le document US°8,527,139 un système de diagnostic pour des systèmes de composants électriques de véhicule, permettant de se conformer à une ou plusieurs exigences automobiles d'intégrité du matériel.

Cependant, l'accueil de nouvelles fonctionnalités embarquées et de règlements toujours plus complexes poussent à des tailles mémoires embarquées et des besoins en temps de téléchargement de ces mémoires de plus en plus grands.

Cette augmentation du volume des données augmente sans cesse ce qui rend le téléchargement incompatible avec le temps imparti à la réalisation de cette opération dans le flux de production. Le temps alloué au téléchargement ne peut pas être allongée sans une réorganisation importante des usines de production.

Il existe donc un besoin de calculateurs et de système permettant d'effectuer des téléchargements dans le temps imparti à la réalisation de cette opération dans le flux principal d'une usine d'assemblage.

Cependant, il est nécessaire de conserver une compatibilité avec les systèmes actuels.

En particulier, il est souhaitable que les calculateurs téléchargeables rapidement puissent être déployés sur des véhicules plus anciens.

En outre il serait souhaitable que les calculateurs téléchargeables rapidement puissent être téléchargés aussi en service après-vente avec les calculateurs existants. En effet, le réseau après-vente d'un constructeur possède un outil vendu dans plusieurs milliers de garage et qui constitue un investissement non remplaçable du jour au lendemain. De plus, le téléchargement en service après-vente n'est pas soumis aux mêmes contraintes que celles issues de la fabrication. En effet, le nombre de téléchargements effectués par jour dans une concession n'est pas comparable à celui d'une unité de fabrication. En outre, le temps alloué au téléchargement dans une concession peut être plus important sans que cela ne pose une contrainte insurmontable.

Le but de l'invention est donc de résoudre ces problèmes et de proposer une solution pour le téléchargement, dans des calculateurs, d'au moins un fichier dans un délai compatible avec le flux de production d'une usine, tout en conservant une compatibilité avec les systèmes existants. L'invention est définie par les revendications indépendantes 1 et 6-8.

Elle propose plus précisément à cet effet un procédé pour le téléchargement de données vers au moins un calculateur de véhicule automobile comportant un premier émetteur-récepteur relié à un premier réseau, caractérisé en que, le calculateur comportant en outre un deuxième émetteur-récepteur relié à un deuxième réseau, le procédé comporte en outre des étapes de :
- Réception d'une requête de téléchargement par l'intermédiaire du premier réseau,
- Activation, par le calculateur, du deuxième émetteur-récepteur,
- Téléchargement des données vers le calculateur par l'intermédiaire du deuxième réseau,
- Désactivation, par le calculateur, du deuxième émetteur-récepteur.

L'activation d'un émetteur-récepteur (en particulier de type Flexray) permet de télécharger plus rapidement les données vers le calculateur.

De plus cette solution assure la compatibilité du téléchargement par le réseau CAN lorsque ce calculateur est monté sur un véhicule muni d'une architecture CAN.

Ainsi un calculateur mettant en oeuvre l'invention peut être monté à la fois sur un véhicule où le deuxième réseau (Flexray) est présent, comme sur un véhicule ne comportant que le premier réseau (CAN I/S). Cette double compatibilité permet à un outil après-vente de continuer de télécharger par le premier réseau (CAN) un calculateur muni des deux interfaces réseaux (CAN et Flexray).

Selon une caractéristique de l'invention, le calculateur comportant, en outre une mémoire dans laquelle sont stockés un logiciel applicatif et un chargeur d'amorçage, le procédé pour le téléchargement comporte en outre une étape de vérification de l'intégrité des données téléchargées et si les données téléchargées sont intègres, l'exécution par le calculateur du logiciel applicatif sinon l'exécution par le calculateur du chargeur d'amorçage.

Selon une autre caractéristique de l'invention, le procédé comporte en outre des étapes de :
- Ouverture d'une session de diagnostic avant l'étape de téléchargement,
- Ouverture d'une session par défaut après l'étape de téléchargement.

Selon une autre caractéristique de l'invention, le procédé comporte en outre une étape de lancement d'un service autorisant la modification des caractéristiques de la communication du calculateur afin d'accroître la bande passante lors du téléchargement.

Selon une autre caractéristique de l'invention, le procédé comporte en outre une étape d'exécution du chargeur d'amorçage avant l'étape activation, du deuxième émetteur-récepteur.

L'invention concerne aussi un calculateur de véhicule automobile comportant un premier émetteur-récepteur relié à un premier réseau et des moyens de réception d'une requête de téléchargement par l'intermédiaire du premier réseau, caractérisé en qu'il comporte en outre :
- un deuxième émetteur-récepteur relié à un deuxième réseau,
- des moyens d'activation et désactivation du deuxième émetteur-récepteur,
- des moyens de mise en oeuvre du procédé de téléchargement selon l'invention.

Selon une caractéristique de l'invention, le calculateur de véhicule comporte en outre un premier et un deuxième émetteur-récepteur, le premier émetteur-récepteur étant relié au premier réseau et le deuxième émetteur-récepteur étant relié au deuxième réseau.

L'invention concerne aussi un véhicule automobile caractérisé en ce qu'il comporte au moins un calculateur selon l'invention et un connecteur comportant une pluralité de broches, un premier ensemble de broches étant relié au premier réseau et un deuxième ensemble de broches étant relié au deuxième réseau.

L'invention concerne aussi un système pour le téléchargement de données comportant un outil de téléchargement, caractérisé en ce qu'il comporte en outre un calculateur selon l'invention et une passerelle reliant l'outil de téléchargement au calculateur, l'outil de téléchargement étant aussi relié au calculateur par l'intermédiaire du premier réseau, la passerelle étant relié au calculateur par l'intermédiaire du deuxième réseau.

L'invention concerne aussi un système pour le téléchargement de données dans lequel le premier réseau est un bus CAN et le deuxième réseau un bus Flexray.

D'autres caractéristiques et avantages de l'invention apparaîtront à l'examen de la description détaillée ci-après, et des dessins annexés, sur lesquels :
- La figure 1 représente un système de téléchargement d'au moins un fichier vers un ou plusieurs calculateurs ;
- La figure 2 représente un logigramme illustrant le procédé de téléchargement de données de l'outil vers le premier calculateur via le premier réseau ;
- La figure 3 représente un logigramme illustrant le procédé de téléchargement de données de l'outil vers le premier calculateur via le deuxième réseau.

Les dessins annexés pourront non seulement servir à compléter l'invention, mais aussi contribuer à sa définition, le cas échéant.

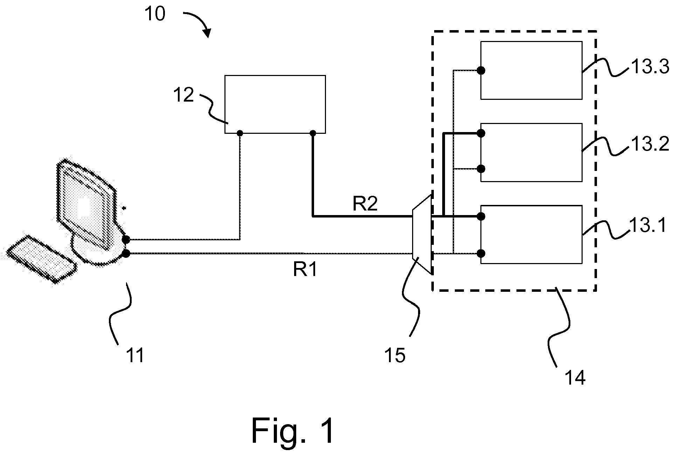

La figure 1 représente un système de téléchargement d'au moins un fichier vers un ou plusieurs calculateurs.

Par exemple, le fichier est un fichier contenant le code exécutable d'un logiciel. Ce code exécutable contient des instructions exécutables par les calculateurs dans lequel ce fichier est téléchargé.

Le système de téléchargement 10 selon l'invention comporte :
- un outil de téléchargement 11 par exemple de type ordinateur personnel (ou PC pour Personal Computer),
- un ou plusieurs calculateurs 13.1, 13.2, 13.3 intégrés dans un véhicule 14 ou disponibles « sur table ».
- une passerelle 12 (débarquée) mettant en relation l'outil 11 et au moins un calculateur 13.1, 13.2.

Chacun des calculateurs est relié à un premier réseau R1. Au moins un calculateur est, en outre, relié à un deuxième réseau R2.

Le premier réseau R1 (par exemple un réseau de communication asynchrone) est un réseau (de communication) chargé de transmettre des premières trames T1 ayant un premier format et présentant un premier débit.

Le deuxième réseau R2 (par exemple un réseau de communication asynchrone) est un réseau (de communication) chargé de transmettre des deuxièmes trames T2 ayant un second format et présentant un deuxième débit.

Selon une caractéristique de l'invention le deuxième débit est strictement supérieur au premier débit du premier réseau R1.

Dans ce qui suit, on considère à titre d'exemple non limitatif que le premier réseau R1 est de type CAN (Controller Area Network - réseau dit évènementiel) et le second réseau R2 est de type FlexRay (réseau dit déterministe (ou « time-triggered »)). Mais, l'invention n'est pas limitée à ces deux types de réseau de communication. Elle concerne en effet toute combinaison de réseaux de communication asynchrones de type différents et présentant des débits différents.

Par ailleurs, on considère dans ce qui suit, à titre d'exemple non limitatif, que le premier (R1) et deuxième réseau (R2) sont embarqués dans un véhicule automobile. Mais l'invention n'est pas limitée à ce type de système. Elle concerne en effet tout type de système, et notamment les aéronefs.

Le premier réseau R1 comprend classiquement des équipements S1 (i = 1 à N, N ≥ 2) qui sont connectés en parallèle à un bus multiplexé. Dans le cas d'un réseau de type CAN, il constitue un réseau de diffusion de (premières) trames T1v. Il est rappelé que dans un réseau de type CAN l'accès d'un équipement (S1i) au bus multiplexé se fait selon le mode dit CSMA/CR, chaque équipement (S1i) devant écouter le trafic sur le bus multiplexé avant de parler, et un mécanisme étant prévu pour résoudre les collisions entre demandes d'émission de trames (T1v) en fonction de priorités prédéfinies.

Le second réseau R2 comprend classiquement des équipements S2j (j = 1 à M, M ≥ 2) qui sont connectés en parallèle à un bus multiplexés. Il est rappelé que dans un réseau de type FlexRay l'accès des équipements (S2j) au bus multiplexé se fait selon le mode dit TDMA (multiplexage temporel), chaque équipement (S2j) disposant au cours de chaque cycle d'au moins une tranche temporelle allouée, pendant laquelle il est autorisé à émettre des données (éventuellement dans une (seconde) trame T2).

Les calculateurs dans lesquels le ou les fichiers doivent être téléchargés sont des calculateurs destinés à être montés dans un véhicule tel qu'un véhicule automobile. Ici, le véhicule automobile est une voiture.

Par exemple, ces calculateurs peuvent être des calculateurs de contrôle moteur, des calculateurs de boîte de vitesses, des calculateurs d'ABS (Antiblock Breaking System), des calculateurs de suspensions ou des calculateurs d'habitacle.

Pour simplifier la figure 1, seuls trois calculateurs 13.1 à 13.3 sont représentés. Par exemple, les calculateurs 13.1 à 13.3 sont respectivement un calculateur de contrôle moteur, un calculateur d'habitacle et un calculateur ABS.

Ces calculateurs comportent des caractéristiques communes décrites ci-après.

Chacun des calculateurs comprend une mémoire non volatile réinscriptible. Par exemple, cette mémoire est une mémoire NVRAM (Non Volatil Random Access Memory). A titre d'illustration, il s'agit d'une mémoire connue sous la terminologie de « mémoire flash » ou « flash Eprom ». Cette mémoire contient des fichiers. Ces fichiers peuvent contenir des instructions exécutables par le calculateur. Ici, il s'agit d'instructions pour contrôler le moteur d'un véhicule dans le cas du calculateur moteur. C'est ce fichier exécutable (aussi appelé applicatif) qui correspond au logiciel pouvant être reprogrammé en usine de montage ou en service après-vente.

La mémoire du calculateur comporte aussi un chargeur d'amorçage (ou bootloader selon l'expression anglo-saxonne). Le chargeur d'amorçage est un logiciel permettant d'initialiser le calculateur et qui contient l'intégralité ou une partie de la procédure de téléchargement.

Chacun des calculateurs comprend également plusieurs émetteurs-récepteurs (ou transceiver selon l'expression anglo-saxonne) permettant de raccorder ce calculateur à différents équipements du véhicule dans lequel il est destiné à être monté. En particulier, l'un de ces émetteurs-récepteurs est destiné à être raccordé au premier réseau R1.

Dans l'exemple, on suppose que les calculateur 13.1 et 13.2 comportent chacun en outre un deuxième émetteur-récepteur relié au deuxième réseau R2 alors que le calculateur 13.3 en est dépourvu.

Le deuxième émetteur-récepteur est activable et désactivable. Dans son état activité, le deuxième émetteur-récepteur permet au calculateur d'envoyer et de recevoir des données via le deuxième réseau R2. Dans son état désactivé, le deuxième émetteur-récepteur n'est plus capable d'échanger des données sur le deuxième réseau R2.

Ceci permet de limiter la consommation électrique et les émissions électromagnétiques liées à une technologie intervenant uniquement pendant l'opération de reprogrammation en usine, le composant Flexray (transceiver) est désactivé en dehors de cette phase.

De façon avantageuse, le véhicule comporte en outre un connecteur 15 comportant une pluralité de broches. Un premier ensemble de broches est relié au premier réseau R1 et un deuxième ensemble de broches au deuxième réseau R2.

L'outil de téléchargement 11 comporte un calculateur programmable apte à exécuter des instructions enregistrées dans une mémoire. A cet effet, le calculateur est raccordé à la mémoire contenant des instructions pour l'exécution du procédé de téléchargement selon l'invention.

L'outil de téléchargement 11 est connecté à un port d'entrée/sortie de la passerelle 12 via une liaison Ethernet car elle permet d'alimenter le réseau Flexray avec un débit élevé (10Mbps ou mégabits par seconde). De plus, cette technologie se justifie au travers de la nature de l'outil qui est un PC renforcé mécaniquement et dispose d'un port Ethernet en standard évitant l'intégration d'une carte de communication supplémentaire.

L'outil de téléchargement 11 est connecté à un port d'entrée/sortie du véhicule via une liaison CAN au travers du connecteur 15. Le réseau CAN, permet, d'une part, (i) la mise à jour des calculateurs ne disposant pas du Flexray pour le téléchargement et, d'autre part, (ii) la mise en route de l'interface Flexray liée aux calculateurs devant être reprogrammés via cette technologie.

La passerelle 12 permet à l'outil de téléchargement 11 de transmettre des trames d'informations vers les calculateurs 13.1, 13.2 et de recevoir, en réponse, des trames d'informations envoyées par chacun de ces calculateurs 13.1, 13.2 vers l'outil 11.

Dans ce cadre, l'outil de téléchargement 11 transmet les données à télécharger via la liaison Ethernet. La passerelle 12 permet de convertir les trames Ethernet, en trames Flexray à destination du ou des calculateurs à mettre à jour. Réciproquement les réponses des calculateurs sont reçues par la passerelle 12 puis remontées à l'outil 11 une fois converties en trames Ethernet.

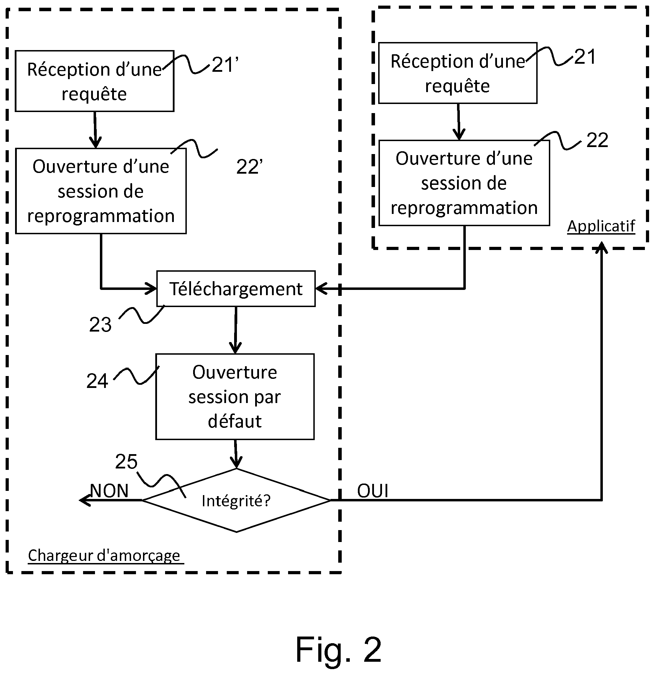

La figure 2 représente un logigramme illustrant le procédé de téléchargement de données de l'outil 11 vers le premier calculateur 13.1 via le premier réseau R1.

Lorsque que les fichiers sont téléchargés dans un service après-vente, le téléchargement n'est pas soumis à une contrainte du temps. Il n'est alors pas nécessaire de faire appel au deuxième réseau R2 (Flexray). L'ensemble de la procédure de téléchargement est donc exécutée par des échanges outils - calculateur transmis via le premier réseau R1 (CAN).

L'étape 21 correspond à la réception, par le premier calculateur 13.1 lorsque celui-ci exécute son logiciel applicatif, d'une requête ayant pour effet d'initier la mise en situation de téléchargement du calculateur. Cette mise en situation a lieu en changeant le mode de fonctionnement courant (aussi appelé session) du calculateur qui passe dans une session dite de « reprogrammation » (étape 22).

Il s'en suit un basculement du logiciel applicatif vers le bootloader. Il devient alors possible de reprogrammer le premier calculateur 13.1 en transmettant les requêtes outil-calculateur permettant de dérouler la procédure de téléchargement et de reprogrammation représentée par l'étape 23.

L'étape 24 est exécutée consécutivement à la réception de d'une requête (DSC 01) de confirmation de la fin du téléchargement et de la reprogrammation. L'étape 24 permet à l'issue du téléchargement de :
1) remettre le calculateur en session par défaut,
2) déclencher une réinitialisation complète du calculateur (ou RESET).

L'étape 25 permet à chaque (re)démarrage du calculateur de vérifier l'intégrité du logiciel « client » (applicatif) et en cas d'issue favorable de basculer du bootloader vers l'applicatif nouvellement téléchargé. Dans le cas contraire le calculateur reste dans le bootloader.

Sans logiciel applicatif valide, le calculateur est maintenu dans le bootloader (étape 25). Il doit cependant être possible de télécharger un applicatif.

L'étape 21' correspond à la réception, par le premier calculateur 13.1 lorsque celui-ci exécute son bootloader, d'une requête ayant pour effet d'initier la mise en situation de téléchargement du calculateur.

Le démarrage du téléchargement depuis le bootloader s'opère comme pour l'applicatif, consécutivement à la réception de la requête de demande de téléchargement par le CAN.

L'ouverture de la session de reprogrammation (étape 22') s'effectue alors directement depuis le bootloader.

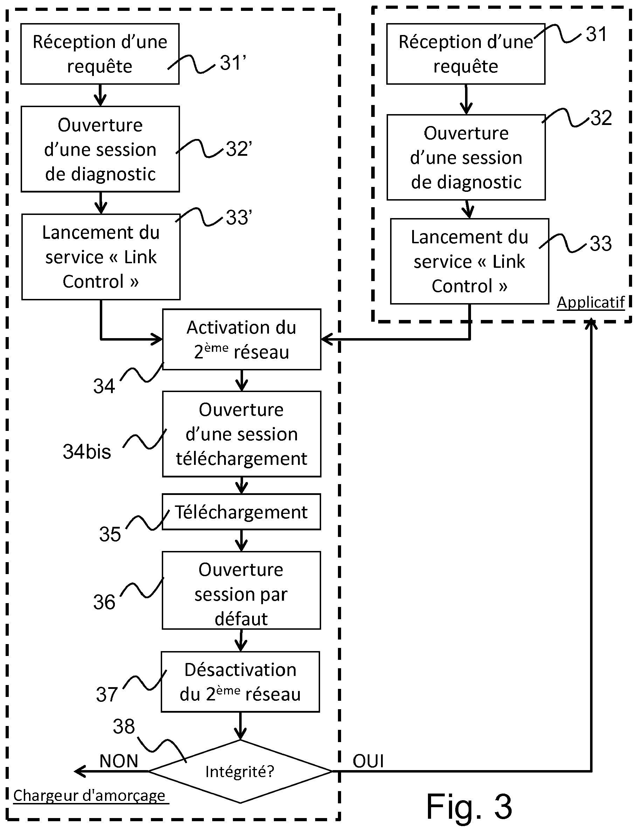

La figure 3 représente un logigramme illustrant le procédé de téléchargement de données de l'outil 11 vers le premier calculateur 13.1 via le deuxième réseau R2.

Lorsque que les fichiers sont téléchargés dans une usine, l'opération de téléchargement fait appel au deuxième réseau (Flexray) afin de permettre la reprogrammation des calculateurs embarqués dans le temps imparti.

Dans le but de limiter la consommation électrique et les émissions électromagnétiques liées à une technologie intervenant uniquement pendant l'opération de reprogrammation en usine, le deuxième émetteur-récepteur (Flexray transceiver) est désactivé en dehors de cette phase.

On utilise alors le premier réseau R1 (CAN) comme moyen permettant la mise en marche du deuxième émetteur récepteur afin de le rendre opérationnel durant l'étape de reprogrammation du calculateur.

Le mécanisme permettant la mise en situation puis le téléchargement via le réseau Flexray comprend les étapes : 31/31', 32/32', 33/33', 34, 35, 36, 37 et 38. Les étapes 31/31', 32/32' et 33/33' assurent le réveil du composant Flexray qui ne peut encore recevoir de commandes, et sont donc à transmettre par le réseau CAN.

L'étape 31 correspond à la réception par le calculateur 13.1 de la requête demandant l'ouverture d'une session de diagnostic étendue, lorsque celui-ci exécute son logiciel applicatif.

L'ouverture 32 de la session de diagnostic étendu permet d'autoriser la réception de requêtes associées au service dit « Link Control » (étape 33). Ce service permet de modifier les caractéristiques de la communication entre outil et calculateur afin d'accroître la bande passante (débit) pour répondre à des cas d'utilisation tel que par exemple le téléchargement.

« Link Control » répond donc bien à la problématique de mise en marche du réseau Flexray via une technologie alternative (CAN). L'étape 33 réalise aussi un basculement dans le bootloader, avec comme point d'entrée une fonction permettant l'allumage du transceiver Flexray (34). Après l'étape 34, il devient possible pour l'outil de téléchargement 11, de communiquer avec le calculateur 13.1 via la technologie Flexray ce qui autorise un débit supérieur au traditionnel réseau CAN et permet ainsi le respect de la contrainte du temps imparti à l'opération de reprogrammation.

A l'identique de 22', l'étape 34bis permet de basculer en « session de reprogrammation » ce qui permet de télécharger le calculateur en transmettant les requêtes outil-calculateur par le réseau Flexray (étape 35). Il est à noter que l'utilisation de la technologie Flexray ne change en rien la procédure de reprogrammation (35) dont le déroulement est indépendant du média (CAN ou Flexray) utilisé.

L'étape 36 est exécutée consécutivement à la réception de la requête (DSC 01) de confirmation de fin de téléchargement et permet à l'issue du téléchargement de 1) remettre le calculateur en session par défaut, 2) déclencher un RESET entraînant la réinitialisation complète du calculateur une exécution de l'étape 37 provoquant l'extinction du composant Flexray. L'étape 38 permet de vérifier l'intégrité du logiciel « client » (applicatif) et en cas d'issue favorable de basculer du bootloader vers l'applicatif nouvellement téléchargé.

On comprend ainsi par la mise en oeuvre de ce mécanisme que l'on conserve donc bien la double compatibilité CAN/Flexray permettant ainsi au réseau APV d'un constructeur de continuer à réaliser du téléchargement sur les nouveaux véhicules munis de calculateur Flexray tout en conservant/prolongeant son parc d'outils actuels.

## Revendications

1. Procédé pour le téléchargement de données vers au moins un calculateur de véhicule (13.1) automobile comportant un premier émetteur-récepteur relié à un premier réseau (R1), tel que, le calculateur (13.1) comportant en outre un deuxième émetteur-récepteur relié à un deuxième réseau (R2), le procédé comporte en outre des étapes de :
- Réception (31, 31') d'une requête de téléchargement par l'intermédiaire du premier réseau (R1),
- Activation (34), par le calculateur (13.1), du deuxième émetteur-récepteur,
- Téléchargement (35) des données vers le calculateur (13.1) par l'intermédiaire du deuxième réseau (R2),
- Désactivation (37), par le calculateur (13.1), du deuxième émetteur-récepteur.

2. Procédé pour le téléchargement selon la revendication 1, caractérisé en ce, le calculateur (13.1) comportant, en outre une mémoire dans laquelle sont stockés un logiciel applicatif et un chargeur d'amorçage, le procédé comporte en outre une étape de vérification (38) de l'intégrité des données téléchargées et si les données téléchargées sont intègres, l'exécution par le calculateur du logiciel applicatif sinon l'exécution par le calculateur du chargeur d'amorçage.

3. Procédé pour le téléchargement selon l'une des revendications précédentes, **caractérisé en ce qu'**il comporte en outre des étapes de :
- Ouverture d'une session de diagnostic (32, 32') avant l'étape de téléchargement (35),
- Ouverture d'une session par défaut (36) après l'étape de téléchargement (35).

4. Procédé pour le téléchargement selon l'une des revendications précédentes, **caractérisé en ce qu'**il comporte en outre une étape de lancement d'un service (33, 33') autorisant la modification des caractéristiques de la communication du calculateur (13.1) afin d'accroître la bande passante lors du téléchargement.

5. Procédé pour le téléchargement selon l'une des revendications 2 à 4, **caractérisé en ce qu'**il comporte en outre une étape d'exécution du chargeur d'amorçage avant l'étape activation (34), du deuxième émetteur-récepteur.

6. Calculateur de véhicule (13.1) automobile comportant un premier émetteur-récepteur apte à être relié à un premier réseau (R1) et des moyens de réception d'une requête de téléchargement par l'intermédiaire du premier réseau (R1) tel qu'il comporte en outre :
- un deuxième émetteur-récepteur apte à être relié à un deuxième réseau (R2),
- des moyens d'activation et désactivation du deuxième émetteur-récepteur,
- ledit calculateur étant apte à télécharger des données par l'intermédiaire du deuxième réseau (R2),
les moyens d'activation du deuxième émetteur-récepteur étant aptes à activer le deuxième émetteur-récepteur suite à la réception par le calculateur (13.1) d'une requête de téléchargement par l'intermédiaire du premier réseau (R1), le calculateur (13.1) étant apte à télécharger des données par l'intermédiaire du deuxième réseau (R2) suite à l'activation du deuxième émetteur-récepteur, les moyens d'activation du deuxième émetteur-récepteur étant aptes à désactiver le deuxième émetteur-récepteur suite au téléchargement des données vers le calculateur (13.1) par l'intermédiaire du deuxième réseau (R2).

7. Véhicule automobile (14) tel qu'il comporte au moins un calculateur (13.1) selon la revendication précédente et un connecteur (15) comportant une pluralité de broches, un premier ensemble de broches étant relié au premier réseau (R1) et un deuxième ensemble de broches étant relié au deuxième réseau (R2).

8. Système pour le téléchargement de données comportant un outil de téléchargement (11), tel qu'il comporte en outre un calculateur (13.1) selon la revendication 6 et une passerelle (12) reliant l'outil de téléchargement (11) au calculateur (13.1), l'outil de téléchargement (11) étant aussi relié au calculateur (13.1) par l'intermédiaire du premier réseau (R1), la passerelle (12) étant relié au calculateur (13.1) par l'intermédiaire du deuxième réseau (R2).

9. Système pour le téléchargement de données selon la revendication précédente, dans lequel le premier réseau est un bus CAN et le deuxième réseau un bus Flexray.

## Patentansprüche

1. Verfahren zum Herunterladen von Daten auf mindestens einen Kraftfahrzeugcomputer (13.1), der einen ersten Sender-Empfänger umfasst, der mit einem ersten Netzwerk (R1) verbunden ist, wobei der Computer (13.1) außerdem einen zweiten Sender-Empfänger umfasst, der mit einem zweiten Netzwerk (R2) verbunden ist, wobei das Verfahren außerdem folgende Schritte umfasst:
- Empfang (31, 31') einer Herunterladeanfrage über das erste Netzwerk (R1),
- Aktivieren (34) durch den Computer (13.1) des zweiten Senders-Empfängers,
- Herunterladen (35) der Daten auf den Computer (13.1) über das zweite Netzwerk (R2),
- Deaktivieren (37) durch den Computer (13.1) des zweiten Senders-Empfängers.

2. Herunterladeverfahren nach Anspruch 1, **dadurch gekennzeichnet, dass**, da der Rechner (13.1) außerdem einen Speicher umfasst, in dem eine Anwendungssoftware und ein Bootlader gespeichert sind, das Verfahren außerdem einen Prüfschritt (38) der Vollständigkeit der heruntergeladenen Daten umfasst, und, falls die heruntergeladenen Daten vollständig sind, der Computer die Anwendungssoftware ausführt, ansonsten Ausführung des Bootladers durch den Computer.

3. Herunterladeverfahren nach einem der vorhergehenden Ansprüche, **dadurch gekennzeichnet, dass** es außerdem folgende Schritte umfasst:
- Öffnen einer Diagnosesession (32, 33') vor dem Herunterladeschritt (35),
- Öffnen einer Standardsession (36) nach dem Herunterladeschritt (35).

4. Herunterladeverfahren nach einem der vorhergehenden Ansprüche, **dadurch gekennzeichnet, dass** es außerdem einen Schritt des Startens eines Dienstes (33, 33') umfasst, der die Änderung der Merkmale der Kommunikation des Computers (13.1) gestattet, um die Bandbreite beim Herunterladen zu steigern.

5. Herunterladeverfahren nach einem der Ansprüche 2 bis 4, **dadurch gekennzeichnet, dass** es außerdem einen Schritt des Ausführens des Bootladers vor dem Aktivierungsschritt (34) des zweiten Senders-Empfängers umfasst.

6. Kraftfahrzeugcomputer (13.1), der einen ersten Sender-Empfänger umfasst, der geeignet ist, um mit einem ersten Netzwerk (R1) verbunden zu sein, und Empfangsmittel einer Herunterladeanfrage über das erste Netzwerk (R1), außerdem umfassend:
- einen zweiten Sender-Empfänger, der geeignet ist, um mit einem zweiten Netzwerk (R2) verbunden zu werden,
- Mittel zum Aktivieren und Deaktivieren des zweiten Senders-Empfängers,
- wobei der Computer geeignet ist, um Daten über das zweite Netzwerk (R2) herunterzuladen,
wobei die Aktivierungsmittel des zweiten Senders-Empfängers geeignet sind, um den zweiten Sender-Empfänger im Anschluss an den Empfang durch den Computer (13.1) einer Herunterladeanfrage über das erste Netzwerk (R1) zu aktivieren,
wobei der Rechner (13.1) geeignet ist, um Daten über das zweite Netzwerk (R2) im Anschluss an das Aktivieren des zweiten Senders-Empfängers herunterzuladen,
wobei die Aktivierungsmittel des zweiten Senders-Empfängers geeignet sind, um den zweiten Sender-Empfänger im Anschluss an das Herunterladen der Daten auf den Computer (13.1) über das zweite Netzwerk (R2) zu deaktivieren.

7. Kraftfahrzeug (14), das mindestens einen Computer (13.1) nach dem vorhergehenden Anspruch und einen Steckverbinder (15) umfasst, der eine Vielzahl von Kontakten umfasst, wobei eine erste Einheit von Kontakten mit einem ersten Netzwerk (R1) verbunden ist, und eine zweite Einheit von Kontakten mit dem zweiten Netzwerk (R2) verbunden ist.

8. System zum Herunterladen von Daten, das ein Herunterladetool (11) umfasst, das außerdem einen Computer (13.1) nach Anspruch 6 und ein Gateway (12), das das Herunterladetool (11) mit dem Computer (13.1) verbindet, umfasst, wobei das Herunterladetool (11) auch mit dem Computer (13.1) über das erste Netzwerk (R1) verbunden ist, wobei das Gateway (12) mit dem Computer (13.1) über das zweite Netzwerk (R2) verbunden ist.

9. System zum Herunterladen von Daten nach dem vorhergehenden Anspruch, wobei das erste Netzwerk ein CAN-Bus ist und das zweite Netzwerk ein Flexray-Bus ist.

## Claims

1. A method for the downloading of data to at least one motor vehicle computer (13.1) comprising a first transmitter-receiver connected to a first network (R1), such that, the computer (13.1) also comprising a second transmitter-receiver connected to a second network (R2), the method also comprises steps of:
- reception (31, 31') of a download request through the first network (R1),
- activation (34), by the computer (13.1), of the second transmitter-receiver,
- downloading (35) of data to the computer (13.1) through the second network (R2),
- deactivation (37), by the computer (13.1), of the second transmitter-receiver.

2. The method for downloading according to claim 1, **characterised in that**, the computer (13.1) also comprising a memory in which application software and a boot loader are stored, the method also comprises a step for verification (38) of the integrity of the downloaded data and if the downloading data have integrity, running by the computer of the application software, otherwise running by the computer of the boot loader.

3. The method for downloading according to any one of the preceding claims, **characterised in that** it also comprises steps of:
- opening a diagnostic session (32, 32') before the downloading step (35),
- opening a default session (36) after the downloading step (35).

4. The method for downloading according to any one of the preceding claims, **characterised in that** it also comprises a step for starting up a service (33, 33') authorising the changing of the communication characteristics of the computer (13.1) in order to increase the pass-band during the downloading.

5. The method for downloading according to any one of claims 2 to 4, **characterised in that** it also comprises a step for running the boot loader before the step for the activation (34) of the second transmitter-receiver.

6. A motor vehicle computer (13.1) comprising a first transmitter-receiver suitable for being connected to a first network (R1) and means for receiving a download request through the first network (R1), such that it also comprises:
- a second transmitter-receiver suitable for being connected to a second network (R2),
- means for activation and deactivation of the second transmitter-receiver,
- said computer being suitable for downloading data through the second network (R2),
the means for activation of the second transmitter-receiver being suitable for activating the second transmitter-receiver following the reception by the computer (13.1) of a download request through the first network (R1),
the computer (13.1) being suitable for downloading data through the second network (R2) following the activation of the second transmitter-receiver,
the means for activation of the second transmitter-receiver being suitable for deactivating the second transmitter-receiver following the downloading of data to the computer (13.1) through the second network (R2) .

7. A motor vehicle (14) such that it comprises at least one computer (13.1) according to the preceding claim and a connector (15) comprising a plurality of pins, a first set of pins being connected to the first network (R1) and a second set of pins being connected to the second network (R2).

8. A system for the downloading of data comprising a downloading tool (11), such that it also comprises a computer (13.1) according to claim 6 and a gateway (12) connecting the downloading tool (11) to the computer (13.1), the downloading tool (11) also being connected to the computer (13.1) through the first network (R1), the gateway (12) being connected to the computer (13.1) through the second network (R2).

9. The system for the downloading of data according to the preceding claim, wherein the first network is a bus CAN and the second network a bus Flexray.
